(19) Europäisches Patentamt
European Patent Office
Office européen des brevets

(11) **EP 0 847 615 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(21) Anmeldenummer: **96934363.1**

(22) Anmeldetag: **20.08.1996**

(51) Int Cl.⁶: **H02M 5/45**, H02M 7/162

(86) Internationale Anmeldenummer:
**PCT/DE96/01546**

(87) Internationale Veröffentlichungsnummer:
**WO 97/08814 (06.03.1997 Gazette 1997/11)**

(54) **VERFAHREN UND VORRICHTUNG ZUR REGELUNG EINES VIERDIMENSIONALEN VEKTORS EINER STRECKE MITTELS EINES WERTEDISKRETEN STELLGLIEDES MIT BEGRENZTER SCHALTFREQUENZ**

METHOD AND DEVICE FOR CONTROLLING A FOUR-DIMENSIONAL VECTOR FOR A CONTROLLED SYSTEM BY MEANS OF A DISCRETE-VALUE CONTROL ELEMENT WITH A LIMITED SWITCHING FREQUENCY

PROCEDE ET DISPOSITIF PERMETTANT LA REGULATION D'UN VECTEUR QUADRIDIMENSIONNEL POUR UN SYSTEME REGULE, AU MOYEN D'UN ORGANE DE REGULATION A VALEURS DISCRETES AVEC UNE FREQUENCE DE COMMUTATION LIMITEE

(84) Benannte Vertragsstaaten:
**DE FR GB IT**

(30) Priorität: **31.08.1995 DE 19532142**

(43) Veröffentlichungstag der Anmeldung:
**17.06.1998 Patentblatt 1998/25**

(73) Patentinhaber: **SIEMENS AKTIENGESELLSCHAFT**
**80333 München (DE)**

(72) Erfinder: **VOGEL, Reinhard**
**D-91058 Erlangen (DE)**

(56) Entgegenhaltungen:
**EP-A- 0 504 449        EP-A- 0 505 591**

**Beschreibung**

Die Erfindung bezieht sich auf ein Verfahren zur Regelung eines vierdimensionalen Vektors einer Strecke mittels eines wertediskreten Stellgliedes mit begrenzter Schaltfrequenz und eine Vorrichtung zur Durchführung dieses Verfahrens.

Für schnellaufende Antriebe großer Leistung (>1 MW) sind Asynchronmaschinen, die von Pulswechselrichtern mit Stromzwischenkreis gespeist werden, von besonderem Interesse. Derartige Umrichter bestehen maschinenseitig aus einem gepulsten GTO-Wechselrichter, während auf der Netzseite ein netzgeführter Thyristorstromrichter verwendet wird.

Der Einsatz von abschaltbaren Ventilen auch auf der Netzseite ermöglicht den Aufbau eines stationär und dynamisch hochwertigen Leistungstellgliedes, welches nur in geringem Maße auf der Netzseite zurückwirkt. Als steuerbare Ventile stehen im genannten Leistungsbereich zur Zeit jedoch nur GTO-Thyristoren zur Verfügung. Mit Rücksicht auf die im Stellglied entstehenden Verluste ist daher die mögliche Pulsfrequenz auf wenige 100 Hz ($f_p \leq 300$ Hz) begrenzt. Wegen seiner geringen Dämpfung bereitet dabei ein LC-Schwingkreis bei transienten Vorgängen, insbesondere auf der Netzseite, erhebliche Probleme. Um den Filterschwingkreis aktiv bedämpfen zu können, ist für den gepulsten Netzstromrichter ein Steuer- und Regelverfahren mit hoher Dynamik erforderlich.

Bei einer Grundschwingungs-Nennfrequenz der Regelstrecke von $f_m = 50$ Hz beträgt das Verhältnis von Schaltfrequenz zur Grundschwingungs-Nennfrequenz somit nur $f_p/f_m \leq 6$.

Bei derartig kleinen Frequenzverhältnissen $f_p/f_m$ werden sogenannte optimierte Pulsmuster eingesetzt, um den Oberschwingungsanteil in der Wechselgröße der Regelstrecke klein zu halten. Die im allgemeinen vorhandene Tiefpaßwirkung der Regelstrecke reicht dafür alleine nicht aus.

Aufgrund der Komplexität der mathematischen Zusammenhänge kann die Optimierung der Schaltzeitpunkte mit den heute verfügbaren technischen Möglichkeiten jedoch nur off-line und nur für den stationären Betriebsfall erfolgen. Dafür müssen idealisierte Annahmen getroffen werden, wie z.B. ideal geglätteter Gleichstrom bzw. ideal geglättete Gleichspannung im Zwischenkreis und Oberschwingungsfreiheit der "inneren" Quellspannung und/oder des Quellstromes der Stellgröße.

Im regelungstechnischen Sinn ist die Modulation mit optimiertem Pulsmuster somit ein gesteuertes Verfahren der Schaltzeitpunkt-Bestimmung mit prinzipbedingten schlechten dynamischen Eigenschaften bei sehr schnellen Sollwert- und Störgrößenänderungen. Da an gepulste Maschinenstromrichter großer Leistung im allgemeinen auch keine extremen Anforderungen an die Führungs- und Störgrößendynamik bestehen, hat die Modulation mit optimiertem Pulsmuster hier weite Verbreitung gefunden.

Anders liegt die Problematik jedoch beim Einsatz von gepulsten Hochleistungsstromrichtern als Netzstromrichter. Durch Schalthandlungen im Netz, Kurzunterbrechungen etc. ist hier praktisch immer mit dem Auftreten schneller transienter Störungen zu rechnen.

Durch eine schnelle Regelung des Stellgliedes auf der Netzseite kann z.B. die Anlagenverfügbarkeit wesentlich erhöht werden, ohne das Stellglied deutlich überdimensionieren zu müssen.

Die Anforderungen an die Dynamik der Netzstromrichterregelung steigen weiterhin dadurch, daß in zunehmendem Maße die Forderung besteht, durch Einsatz von Filtern höherer Ordnung ein besonders "netzfreundliches" Verhalten der gepulsten Stromrichter zu erreichen. Die Eigendämpfung der verwendeten LC-Filter ist dabei generell sehr klein, so daß durch eine dynamisch hochwertige Stromrichterregelung eine wirksame, aktive Schwingungsbedämpfung erfolgen muß.

Wenn dann der LC-Filter auch noch funktionaler, unverzichtbarer Bestandteil eines Stellkonzeptes ist, wie das z.B. bei gepulsten Stromrichtern mit Stromzwischenkreis der Fall ist, wird erst mit der Verfügbarkeit eines dynamisch hochwertigen Modulations- und Regelverfahrens der Einsatz solcher Stellglieder als Netzstromrichter überhaupt möglich.

Ein gesteuertes Verfahren mit off-line berechneten Schaltzeiten genügt diesen Anforderungen nicht.

Für Großantriebe mit langsam taktenden PWM-Wechselrichtern mit Spannungszwischenkreis, bei denen der Filter (Drossel) ein System 1. Ordnung darstellt, haben Holtz und Beyer ein stationär und dynamisch hochwertiges Steuer- und Regelverfahren in den folgenden Veröffentlichungen:

- IEEE Transactions on Ind. App., Vol. 29, No. 6, November/December 1993, Seiten 1098 bis 1105
- IEEE Transactions on Ind. App., Vol. 30, No. 4, July/August 1994, Seiten 1048 bis 1057
- IEEE Industry Applications Society Annual Meeting, Denver, 1994, mit dem Titel "Fast Current Trajectory Tracking Control Based on Synchronous Optimal Pulswidth Modulation"
- Europäische Patentschrift 0 504 449 B1 mit dem Titel "Verfahren und Vorrichtung zur Erzeugung von Schaltzustandssignalen aus einem Steuerspannungszeiger"

vorgestellt. Dieses Verfahren läßt sich jedoch nicht auf ein Umrichtersystem mit Stromzwischenkreis anwenden, da hier sowohl netz- wie auch maschinenseitig Filterkreise 2. Ordnung existieren.

Grundgedanke dieses von Holtz und Beyer propagierten Verfahrens ist es, die dynamischen Modulationsfehler, die z.B. dann auftreten, wenn der Pulsmusterwechsel zu einem beliebigen (nicht optimalen) Zeitpunkt stattfindet, vorausberechnen und somit prädiktiv ausregeln zu können. Voraussetzung dabei ist allerdings, daß sich die interessierenden Zustandsgrößen des Stellgliedes und der Strecke - im mathematischen Sinn - eineindeutig aufeinander abbilden lassen. Damit ist gemeint, daß z.B. Wechselrichter mit Spannungszwischenkreis Änderungen der Schaltzustände und Schaltzeiten (entsprechend Änderungen der Spannungszeitflächen) sich in eindeutig berechenbarer Weise auf Änderungen des Strangstromverlaufs der Regelstrecke auswirken, so daß ein zeitlicher Verlauf dieses Stromes wiederum eindeutig in eine prädiktive vorzunehmende Änderung der Spannungszeitfläche umgerechnet werden kann.

Das kann aber nur dann gelingen, wenn die Regelstrecke einen Filterkreis 1. Ordnung darstellt. Findet sich demgegenüber in der Regelstrecke ein weiterer, andersartiger Energiespeicher, der für die hier betrachteten transienten Vorgänge beim Pulsen von Interesse ist (z.B. ein Filterkondensator), so ist dieses Verfahren nicht mehr anwendbar. Änderungen der Spannungszeitfläche des Stellgliedes lassen sich dann z.B. nicht mehr eindeutig in eine Änderung des Strangstromverlaufes einer in der Regelstrecke angeordneten Asynchronmaschine umrechnen. Für den Fall, daß die Regelstrecke - im Sinne der hier betrachteten transienten Vorgänge beim Pulsen - ein System höherer Ordnung (meist 2. Ordnung) ist, müssen daher andere Verfahren für eine dynamisch hochwertige Bestimmung der Schaltzeiten und -zustände angewendet werden.

Für Stromzwischenkreis-Wechselrichter mit abschaltbaren Ventilen wurde von Amler ein hochdynamisches, zustandsorientiertes Steuer- und Regelverfahren entwickelt. Dieses Verfahren ist beispielsweise in der europäischen Patentschrift 0 505 591 mit dem Titel "Verfahren und Schaltungsanordnung zur Regelung eines zweidimensionalen Vektors einer Strecke mittels eines wertediskreten Stellgliedes mit begrenzter Schaltfrequenz" und im Aufsatz "A new control method for current-source inverters with self-extinction devices, combining low distortion of voltage and current with fast dynamic responses", EPE Firenze, 1991, Seiten 1 bis 6, näher beschrieben.

Dieses Regelverfahren sieht eine vollständige on-line Berechnung aller Schalthandlungen auf der Basis einer vereinfachten zustandsorientierten Beschreibung des Systemverhaltens vor.

Das von Amler vorgeschlagene Regelverfahren ist für den hier betrachteten Anwendungsfall für einen praktischen Einsatz nicht geeignet.

Nachfolgend sollen die Gründe erläutert werden, weshalb dieses Verfahren bei sehr kleinen Frequenzverhältnissen $f_p/f_m \leq 6$ kein befriedigendes Betriebsverhalten aufweist.

Dazu soll zunächst festgestellt werden, daß der Energiezustand einer Regelstrecke mit LC-Filter nur dann in jedem Zeitpunkt eindeutig beschreibbar ist, wenn die beiden relevanten Zustandsgrößen - Kondensatorspannung in der komplexen Ebene und Drosselstrom in der komplexen Ebene - gleichzeitig und in ihrer Wechselwirkung zueinander betrachtet werden.

Amler geht demgegenüber von der Annahme aus, daß es ausreichend ist, einen zweidimensionalen Vektor (z.B. Spannung oder Strom in der komplexen Ebene) optimal zu regeln. Die Regelung der jeweils anderen relevanten mehrdimensionalen Zustandsgröße erfolgt lediglich indirekt über das Integral der ersten Zustandsgröße und damit nur als Mittelwert.

Inwieweit dieses Regelverfahren für einen praktischen Einsatz ausreichend genaue Ergebnisse bei der Schaltzeitpunkt-Berechnung liefert, hängt nun davon ab, welchen Einfluß die praktisch immer vorhandene Verkoppelung beider zweidimensionaler Vektoren (Spannung und Strom) auf die Berechnung hat. Dieser Einfluß auf die Berechnung hängt nun aber entscheidend davon ab, in welchem Verhältnis die Zeitabschnitte, auf die sich die Berechnungsgleichungen beziehen, zur Periodendauer der Resonanzfrequenz $T_{Res}$ der LC-Strecke stehen.

Für das dynamische Verhalten dieses Verhaltens ist - vereinfacht dargestellt - die Abtast- bzw. Rechenperiodendauer maßgeblich. Sie kann für den betrachteten Anwendungsfall in der Praxis hinreichend klein gegenüber der Periodendauer der Resonanzfrequenz $T_{Res}$ gewählt werden. Mit den in der EP 0 505 591 B1 angegebenen vereinfachten Gleichungen zur Berechnung der verbleibenden Zeit bis zur nächsten Schalthandlung ist somit ein befriedigendes dynamisches Verhalten erreichbar. Da die dabei verwendeten Sollwerte jedoch nur einen zweidimensionalen Sollwert-Zustandsvektor repräsentieren, arbeitet die Regelung nur bedingt stabil.

Für das stationäre Betriebsverhalten ist maßgebend, inwieweit die berechneten Sollwerte tatsächlich die optimalen Soll-Schaltpunkte des Stellgliedes sind.

Hierzu läßt sich folgendes feststellen:

Da die Dauer der Zeitabschnitte und die Gesamtzeit der EP 0 505 591 für die Berechnung der Soll-Umschaltpunkte maßgebend sind, können sie gegenüber der Periodendauer der Resonanzfrequenz nicht vernachlässigt werden, da für den hier betrachteten Anwendungsfall bei Hochleistungsstromrichtern die Resonanzfrequenz und die Ventilschaltfrequenz in der gleichen Größenordnung liegen. Die Änderung einer Zustandsgröße kann somit nicht mehr allein auf die Wirkung der Stellgrößen-Istwerte (Schaltzustände des Stromrichters) zurückgeführt werden, da in den Zeitabschnitten der EP 0 505 591 B1 zusätzlich ein nicht mehr zu vernachlässigender Energieaustausch zwischen den beiden Speichern der Regelstrecke stattfindet.

Die Betrachtung der Änderung nur einer Zustandsgröße ist somit hier nicht mehr ausreichend, da die Verkopplung beider Zustandsgrößen erheblichen Einfluß auf das Berechnungsergebnis hat. Insbesondere die Annahme bei der EP 0 505 591 B1, daß sich die allein betrachtete Zustandsgröße linear ändert, während die andere Zustandsgröße konstant bleibt, stellt hier eine unzulässige Näherung dar.

Bei Umrichtern mit Gleichstromzwischenkreis entstehen im Zwischenkreis durch die Verwendung magnetischer Energiespeicher höhere ohmsche Verluste als bei Umrichtern mit Spannungszwischenkreis und kapazitiven Energiespeichern.

Bei Umrichtern mit Gleichstromzwischenkreis ist es aus Verlustleistungsgründen sinnvoll, den Zwischenkreisstrom (und damit verbunden auch die verfügbare Zwischenkreisleistung) immer nur in der Höhe vorzugeben, wie es zur Deckung der momentan geforderten mechanischen Antriebsleistung erforderlich ist. Die Leistungsstellung des Gesamtantriebes erfolgt daher praktisch ausschließlich über den gepulsten Netzstromrichter. Ein für diesen Stromrichter geeignetes Steuer- und Regelverfahren hat unter Beachtung der nur geringen maximal zulässigen Schaltfrequenz folgende Anforderung zu erfüllen:

stationärer Betrieb:

- Betrieb mit arbeitspunkt- bzw. lastabhängiger Ansteuerung
- hohe Aussteuerbarkeit (maximaler Aussteuergrad A≥0,95 bezogen auf Vollblocktaktung)
- Leistungsfaktor $\cos\Phi\approx1$ in einem möglichst großen Betriebsbereich
- geringe Netzstrom-Oberschwingungen

Dynamisches Verhalten:

- hohe Dynamik bezüglich der Störgrößenausregelung, um Anregungen des Filterschwingkreises durch Netzeinflüsse (Netzharmonische, Schalthandlungen im Netz) und durch den maschinenseitigen Wechselrichter (Interharmonische) wirkungsvoll zu unterdrücken,
- hohe Dynamik bei Führungsgrößenänderungen, da die Leistungsstellung praktisch ausschließlich über den Netzstromrichter erfolgt.

Der netzseitige Stromrichter muß demzufolge hohen dynamischen Anforderungen bzgl. der Störgrößenausregelung genügen. Ein gesteuertes Verfahren mit off-line berechneten Schaltzeiten genügt diesen Anforderungen nicht.

Der Erfindung liegt nun die Aufgabe zugrunde, ein Verfahren und eine Vorrichtung zur Regelung eines vierdimensionalen Vektors einer Strecke mittels eines wertediskreten Stellgliedes mit begrenzter Schaltfrequenz anzugeben.

Diese Aufgabe wird erfindungsgemäß gelöst mit dem Merkmal des Anspruchs 1.

Die Grundgedanken des neuen Verfahrens sind:

1. Die off-line berechneten Pulsmuster dienen dazu, EnergieSollwerte der Regelstrecke zu bestimmen. Diese Energiesollwerte beschreiben sowohl den Grund- wie auch den Oberschwingungs-Sollzustand des LC-Filters (und damit auch der Regelstrecke) zu den diskreten Schaltzeitpunkten des optimierten Pulsmusters für den ungestörten stationären Betriebsfall.

2. Die Aufgabe der zustandsorientierten Regelung besteht darin, die tatsächlichen Schaltzeitpunkte so anzupassen, daß im Schaltaugenblick die Differenz zwischen den Soll- und Istwerten der Filterenergie minimal wird.

3. Da die ermittelten neuen Schaltzeitpunkte zunächst nur das Ergebnis einer rein mathematischen Berechnung sind, müssen sie einer Plausibilitätsprüfung unterzogen werden, um den Bezug zur physikalischen Realität herzustellen.

Die erfindungsgemäß Lösung der Probleme besteht darin, die Vorteile von off-line berechneten optimierten Pulsmustern (hohe stationäre Güte) mit der hohen Dynamik einer on-line arbeitenden, mehrdimensionalen zustandsorientierten Regelung zu verbinden.

Die einzelnen Schritte bei der Anwendung dieses Verfahrens werden nachfolgend näher erläutert.

Berechnung und Auswahl der optimierten Pulsmuster:

Die Berechnung der optimierten Pulsmuster erfolgt off-line unter nachfolgenden Kriterien:

- geringer Klirr-Faktor des Netzstromes,
- Vermeidung von Anregungen des Filterkreises,
- Einhaltung der Mindestschaltzeiten und
- möglichst große Maximalaussteuerung

Die off-line Optimierung der Pulsmuster erfolgt dabei mit den idealisierten Annahmen, daß Netzspannung und Zwischenkreisstrom oberschwingungsfrei sind. Da die Grundschwingungsfrequenz der Regelstrecke (Netzfrequenz) annähernd konstant ist, sind verschiedene Pulsmuster nur zur Realisierung verschiedener Aussteuergrade erforderlich. So erfolgt z.B. der Wechsel auf ein andersartiges Pulsmuster nur dann, wenn dieses zur Einhaltung von Mindestein- bzw. -ausschaltzeiten der Ventile bei einer Änderung der Grundschwingungsaussteuerung erforderlich ist. Im Vergleich zur Anwendung optimierter Pulsmuster bei Maschinenstromrichtern werden somit wesentlich weniger verschiedenartige Pulsmuster benötigt. Die Auswahl des für den jeweiligen Arbeitspunkt geeigneten Pulsmusters erfolgt on-line anhand der quasistationär erforderlichen Grundschwingungsaussteuerung.

On-line Berechnung der idealisierten Momentanwerte:
Für die vom ausgewählten Pulsmuster vorgegebenen Soll-Schaltzeitpunkte werden on-line die zugehörigen Sollwerte für den vierdimensionalen Vektor der Strecke berechnet. Diese on-line Berechnung wird ebenfalls unter idealisierten Annahmen (Netzspannung und Zwischenkreisstrom oberschwingungsfrei) statt Die berechneten Sollwerte des vierdimensionalen Vektors der Strecke beschreiben somit zu diskreten Zeitpunkten den Soll-Energiezustand des Filterschwingkreises für den eingeschwungenen, ungestörten stationären Betrieb unter idealen Bedingungen.

On-line Berechnung der Schaltzeitpunkte:
Die zu den Soll-Schaltzeitpunkten des optimierten Pulsmusters bestimmten Sollwerte der beiden Zustandsgrößen der Strecke repräsentieren die Energiesollwerte des Filters in der Form eines jeweils vierdimensionalen Vektors. Ziel der zustandsorientierten Regelung ist es, die tatsächlichen Schaltzeitpunkte so zu wählen, daß die Differenz zwischen dem Sollwert der Schwingkreisenergie zum ausgelesenen Zeitpunkt des optimierten Pulsmusters und dem dem Istwert im Schaltaugenblick minimal wird.
Durch die Verbindung der hohen stationären Güte von off-line optimierten Pulsmustern mit der hohen Dynamik einer Zustandsregelung empfiehlt sich dieses Verfahren auch für den maschinenseitigen Wechselrichter. Es erscheint auch für Pulswechselrichter mit Spannungszwischenkreis und netz- bzw. maschinenseitigem Filter geeignet. Bei der on-line Berechnung der Energiesollwerte ist dann von einer konstanten Zwischenkreisspannung auszugehen.
Der Aufbau einer Vorrichtung zur Durchführung des erfindungsgemäßen Verfahrens ist dem Anspruch 4 zu entnehmen, wobei der Grundschwingungs-Sollwertrechner mit nachgeschaltetem Pulsmusterspeicher und Steuersatz aus Steuerschaltungen für gepulste Stromrichter bekannt ist, die mit optimierten Pulsmustern betrieben werden. Für die Durchführung des erfindungsgemäßen Verfahrens wird diese Steuerschaltung mit einer Einrichtung zur Berechnung eines Sollwertes des vierdimensionalen Vektors der Strecke, einer Einrichtung zur Berechnung eines tatsächlichen Schaltzeitpunktes und einer Einrichtung zur Plausibilitätsprüfung erweitert.
Zur weiteren Erläuterung der Erfindung wird auf die Zeichnung Bezug genommen, in der ein Ausführungsbeispiel einer Vorrichtung zur Durchführung des erfindungsgemäßen Verfahrens schematisch veranschaulicht ist.

Figur 1     zeigt ein vereinfachtes Gesamtschaltbild eines PWM-Umrichtersystems für Asynchronmaschinenantriebe großer Leistung,
Figur 2     zeigt ein Prinzipschaltbild der Vorrichtung zur Durchführung des erfindungsgemäßen Verfahrens, in
Figur 3     ist ein vereinfachtes 2-phasiges Ersatzschaltbild des Stellgliedes veranschaulicht,
Figur 4     zeigt in einem Diagramm die Gültigkeitsgrenzen der berechneten Schaltzeit bzw. -winkel, die
Figur 5     zeigt jeweils in einem Diagramm die Zustandsgrößen $i_L$ und $u_C$ bei einem Pulsmusterwechsel ohne und in
Figur 6     mit dem erfindungsgemäßen Verfahren, die
Figur 7     zeigt jeweils in einem Diagramm die Zustandsgrößen $i_L$ und $u_C$ bei einer interharmonischen Schwingungsanregung des Filterkreises der Strecke ohne und in
Figur 8     mit dem erfindungsgemäßen Verfahren, und die
Figur 9     zeigt jeweils in einem Diagramm das transiente Verhalten der Zustandsgrößen $i_L$ und $u_C$ bei sprungförmiger Anregung der Netzspannung ohne und in
Figur 10    mit dem erfindungsgemäßen Verfahren.

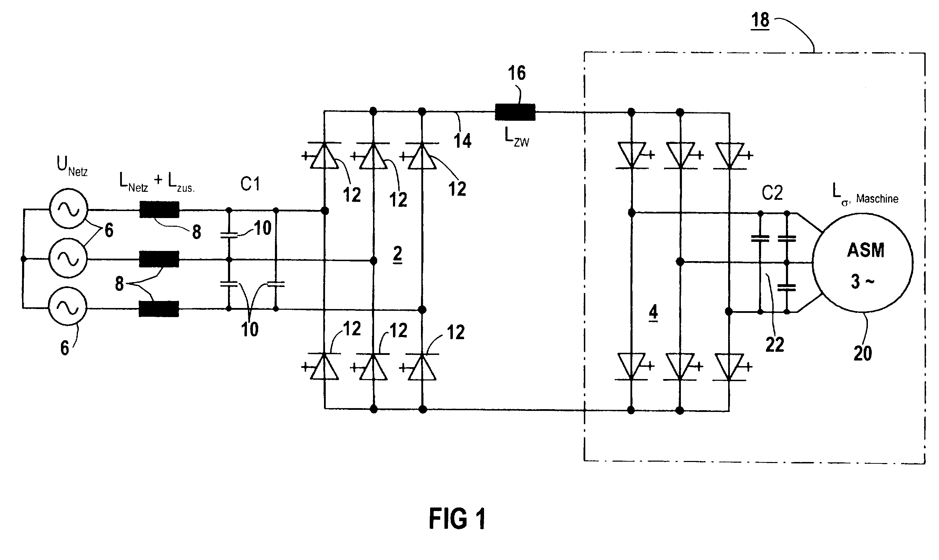

Die Figur 1 zeigt ein vereinfachtes Gesamtschaltbild eines PWM-Umrichtersystems für einen Asynchronmaschineantrieb großer Leistung, wobei die wesentlichen Komponenten dieses Hoch) leistungsantriebes mit Stromzwischenkreis dargestellt sind. Sowohl auf der Netz- wie auch auf der Maschinenseite werden gepulste Stromrichter 2 und 4 verwendet. In dieser vereinfachten Darstellung sind folgende Komponenten des Antriebssystems erkennbar:

- die dreiphasige Netzspannungsquelle 6,

- die in einer dreiphasigen Drossel zusammengefaßte, netzseitig wirksame Induktivität 8,
- der ebenfalls dreiphasige Kondensator 10, der zur Kommutierung der Stromrichterventile des netzseitigen Strom> richters 2 benötigt wird und gemeinsam mit der Induktivität 8 einen (Filter-)Schwingkreis bildet,
- der netzseitige gepulste Stromrichter 2, der hier mit GTO-Thyristoren 12 ausgeführt ist,
- die im Gleichstromzwischenkreis 14 angeordnete Glättungsdrossel 16 und
- der Schaltungsblock 18, in dem der maschinenseitige Wechselrichter 4, die an ihn angeschlossene Asynchronmaschine 20 und ein auf der Maschinenseite ebenfalls erforderlicher dreiphasiger Kondensator 22 dargestellt sind.

Die maximal zulässige (mittlere) Schaltfrequenz $f_p$ der Halbleiterventile 12 des gepulsten Stromrichters 2 beträgt dabei mit Rücksicht auf die im Stellglied 2 entstehenden Verluste nur wenige 100 Hz; in der Regel werden nicht mehr als $f_p$=300 Hz erreicht. Da bei einer Grundschwingungsfrequenz der Regelstrecke 6, 8 und 10 von $f_m$=50 Hz das Verhältnis von Schaltfrequenz zu Grundschwingungsnennfrequenz somit nur $f_p/f_m \leq 6$ ist, werden optimierte Pulsmuster eingesetzt, um den Oberschwingungsanteil in der Wechselgröße der Regelstrecke 6, 8 und 10 klein zu halten. Wegen der geringen Dämpfung des LC-Schwingkreises am netzseitigen Eingang des Stellgliedes 2 bereitet dieser LC-Schwingkreis bei transienten Vorgängen, insbesondere auf der Netzseite, erhebliche Probleme. Mit off-line optimierten Pulsmustern allein können diese Probleme nicht gelöst werden.

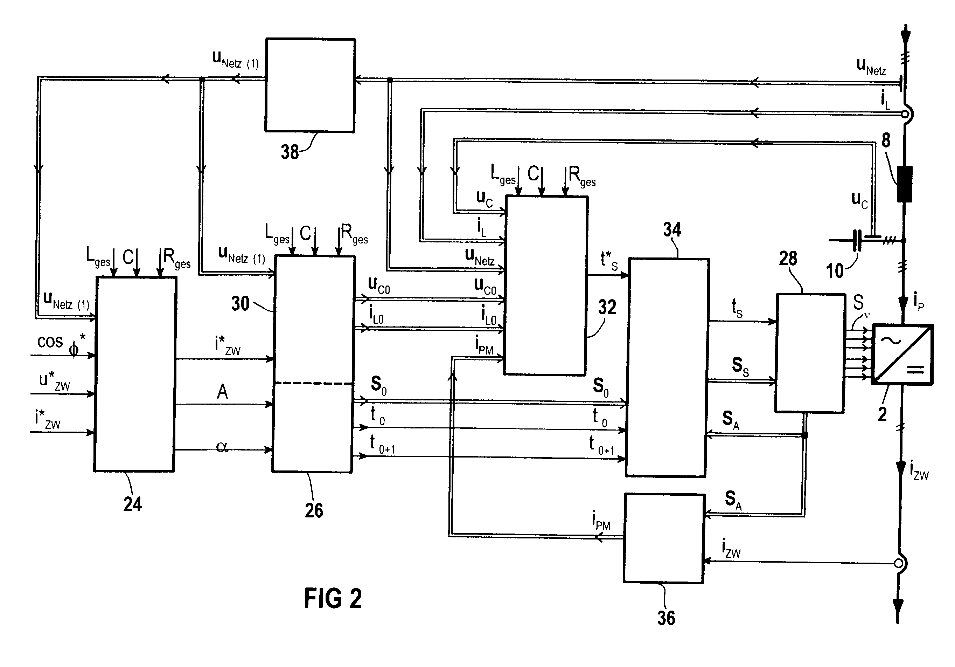

In der Figur 2 ist ein Prinzipschaltbild der Vorrichtung zur Durchführung des erfindungsgemäßen Verfahrens dargestellt. In diesem Prinzipschaltbild sind Vektoren durch einen fettgedruckten Buchstaben dargestellt. Bereits aus einer Steuerung eines gepulsten Stromrichters 2 ist ein Grundschwingungs-Sollwertrechner 24, ein Pulsmusterspeicher 26 und ein Steuersatz 28 bekannt. Diesem Grundschwingungs-Sollwertrechner 24 werden die Netz-Grundschwin-gungsspannung $\mathbf{u}_{Netz(1)}$, die Sollwerte der Ausgangsspannung $\mathbf{u}_{ZW}^*$ und des Ausgangsstromes $\mathbf{i}_{ZW}^*$ des Stellgliedes 2, ein Soll-Netzleistungsfaktor cos$\Phi^*$ und Parameter der Regelstrecke 6, 8 und 10, nämlich der netzseitige ohmsche Widerstand $R_{ges}$, die als dreiphasige Drossel 8 dargestellte netzseitig wirksame Induktivität $L_{ges}$ und der Kapazitätswert C des dreiphasigen Kondensators 10 zugeführt. Aus diesen Werten wird der Soll-Arbeitspunkt des Stellgliedes 2 ermittelt, wobei dieser durch die Größen Soll-Aussteuerungsgrad A des Stellgliedes 2 und Grundschwingungsphasen-winkel $\alpha$ des netzseitigen Soll-Stellgliedstromes $\mathbf{i}_P^*$ beschrieben wird. Mit Hilfe des Soll-Aussteuerungsgrades A wird ein für den quasi-stationaren Betrieb geeignetes off-line optimiertes Pulsmuster aus dem Pulsmusterspeicher 26 aus-gewählt. Da mit $\alpha$ auch der Grundschwingungsphasenwinkel des Pulsmusters bekannt ist, können daraus aus dem Pulsmusterspeicher 26 der nächste Soll-Schaltzustand $S_0$ und der dazugehörige Schaltzeitpunkt $t_0$ bestimmt werden. Bei einer bekannten Steuerung eines Stellgliedes 2 werden mittels des Steuersatzes 28 aus dem Soll-Schaltzustand $\mathbf{S}_0$ und dem dazugehörigen Schaltzeitpunkt $t_0$ Ansteuersignale $\mathbf{S}_v$ für das wertediskrete Stellglied 2 mit begrenzter Schaltfrequenz $f_p$ generiert.

Damit das erfindungsgemäße Verfahren, nämlich die Regelung eines vierdimensionalen Vektors $\mathbf{u}_C$, $\mathbf{i}_L$ einer Strecke 6, 8 und 10 mittels eines wertediskreten Stellgliedes 2 mit beschränkter Schaltfrequenz $f_p$, durchgeführt werden kann, werden zusätzliche Einrichtungen 30, 32 und 34 eingefügt. Die Einrichtung 30 ist eingangsseitig einerseits mit dem Pulsmusterspeicher 26 und andererseits mit dem Grundschwingungs-Sollwertrechner 24 verknüpft und ausgangsseitig mit der Einrichtung 32 verbunden, die ausgangsseitig mit der Einrichtung 34 verknüpft ist. Außerdem ist diese Einrichtung 34 eingangsseitig mit den Ausgängen des Pulsmusterspeichers 26 und ausgangsseitig mit dem Steuersatz 28 verbunden. Die Einrichtung 30 dient zur Berechnung eines Sollwertes $\mathbf{u}_{C0}$, $\mathbf{i}_{L0}$ eines vierdimensionalen Vektors $\mathbf{u}_C$, $\mathbf{i}_L$ der Strecke 6, 8 und 10. Diese on-line berechneten Werte beschreiben zu den diskreten Zeitpunkten den Energiezustand des LC-Filterschwingkreises für den eingeschwungenen, ungestörten stationären Betrieb unter idealen Bedingungen. Der Energiezustand zum Soll-Schaltzeitpunkt $t_0$ ist somit der gesuchte vierdimensionale Sollwertvektor, der den Soll-Umschaltpunkt beschreibt. Das heißt, die beiden Zustandsgrößen $\mathbf{u}_C$ (Kondensatorspannung) und $\mathbf{i}_L$ (Netzstrom) der Strecke 6, 8 und 10 bilden den vierdimensionalen Vektor der Strecke, wodurch der Energieinhalt des Filterschwingkreises eindeutig und vollständig beschreibbar ist.

Zur Berechnung der Sollwerte für die Zustandsgrößen $\mathbf{u}_{C0}$ und $\mathbf{i}_{L0}$ für die vom ausgewählten Pulsmuster vorgegebenen Soll-Schaltzeitpunkte $t_0$ werden der Einrichtung 30 die Netz-Grundschwingungsspannung $\mathbf{u}_{Netz(1)}$, die bereits genannten Streckenparameter $L_{ges}$, C, $R_{ges}$ und der Sollwert des Stellglied-Ausgangsstromes $\mathbf{i}_{ZW}^*$ zugeführt. Aus diesem Stellglied-Ausgangsstrom $\mathbf{i}_{ZW}^*$ und dem zeitlichen Verlauf des ausgewählten optimierten Pulsmusters ist der Sollwertverlauf des Stellglied-Eingangsstromes $\mathbf{i}_P$ bekannt. Mit dieser Einrichtung 30 wird der für die nachgeschaltete, zustandsorientierte Regelung (Einrichtung 32) benötigte Energie-Sollzustand des netzseitigen Filters zum Zeit-punkt $t_0$ berechnet. Dieser Energie-Sollzustand stellt einen vierdimensionalen Sollvektor dar, der sich durch den Soll-vektor der Kondensatorspannung $\mathbf{u}_{C0}$ zum Zeitpunkt $t_0$ (zweidimensional) und den Sollvektor des Netzstromes $\mathbf{i}_{L0}$ zum Zeitpunkt $t_0$ (zweidimensional) eindeutig beschreiben läßt. Dieser vierdimensionale Sollwertvektor $\mathbf{u}_{C0}$ und $\mathbf{i}_{L0}$ wird der Einrichtung 32 zur Berechnung eines tatsächlichen Schaltzeitpunktes $t_S^*$ zugeführt. Diese Einrichtung 32 wird auch als Zustandsregler bezeichnet.

Für die on-line Berechnung der Werte $\mathbf{u}_{C0}$ und $\mathbf{i}_{L0}$ ist ein geeignetes Koordinatensystem zu wählen, in dem die Lösung der Differentialgleichungen möglichst einfach wird. Die Rechnung in $\alpha$-$\beta$-Koordinaten mit einem Ersatz-

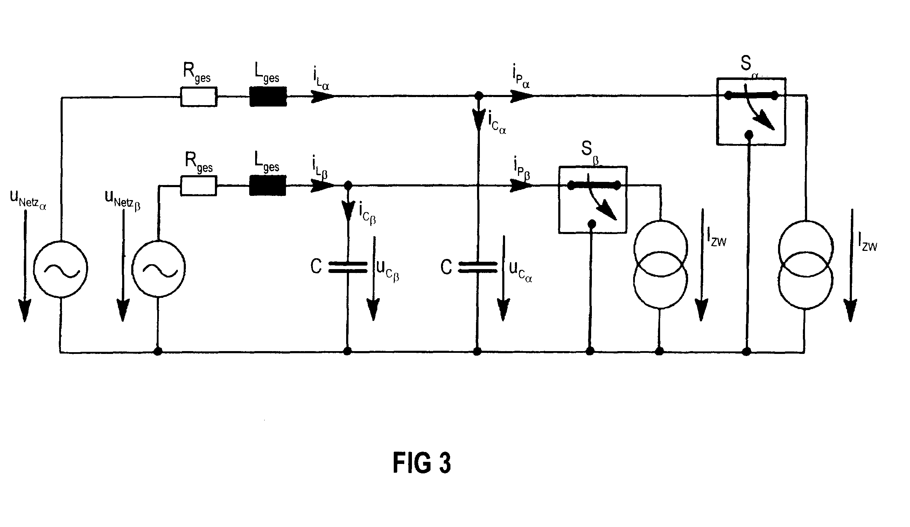

schaltbild entsprechend der Figur 3 erweist sich dabei als besonders vorteilhaft, da wegen des als ideal geglättet angenommenen Zwischenkreisstromes $I_{ZW}$ die netzseitigen Umrichterströme $i_{P\alpha,\beta}$ abschnittsweise konstante Größen sind. Das Stellglied 2 wird dabei durch die Schalterfunktion $S_\alpha$ bzw. $S_\beta$ symbolisiert, die aus der skalaren Größe des Zwischenkreisstromes $i_{ZW}$ die in der komplexen Ebene liegenden Zeiger $i_{P\alpha}$ und $i_{P\beta}$ erzeugen. Auf der Netzseite erfolgt eine Zusammenfassung der Netz- und Filterdrosselimpedanzen zu gemeinsamen ohmschen und induktiven Widerständen. Die Netzspannungen $u_{S\alpha}$ und $u_{S\beta}$ werden den Spannungen am Netzanschlußpunkt des Umrichters gleichgesetzt. Damit entsteht zwar ein geringfügiger (im Bedarfsfall kompensierbarer) Fehler in der Grundschwingungsbetrachtung, das hauptsächlich interessierende Schwingverhalten des Filters ist aber umso einfacher beschreibbar.

Der Einrichtung 32 (Zustandsregler) werden außer diesen Zustandsgrößen $u_{C0}$ und $i_{L0}$ des vierdimensionalen Vektors $\mathbf{u}_C$ und $\mathbf{i}_L$ der Strecke 6, 8 und 10 die Istwerte der Zustandsgrößen $\mathbf{u}_C$ und $\mathbf{i}_L$, die Streckenparameter $L_{ges}$, C und $R_{ges}$, die Netzspannung $\mathbf{u}_L$ und eine Modell-Zustandsgröße $\mathbf{i}_{PM}$ des Stellglied-Eingangsstromes $\mathbf{i}_P$ zugeführt. Die Aufgabe dieses Zustandsreglers 32 besteht darin, den tatsächlichen Schaltzeitpunkt $t_S$ on-line so anzupassen, daß zu diesem Zeitpunkt die Differenz zwischen dem Soll- und Istwert der Filterenergie minimal wird. Die Forderung "Minimierung der Differenz zwischen dem Soll- und Istwert der Filterenergie" stellt das erforderliche Optimierungskriterium für das vorliegende vierdimensionale Optimierungsproblem dar.

Zur mathematischen Formulierung dieser Forderung lassen sich mehrere Gleichungsansätze finden. Nachfolgend wird der Lösungsansatz vorgestellt, der die mit Abstand besten Simulationsergebnisse brachte (Minimierung der "Differenzenergie $W_\Delta$"). Ausgehend von den allgemein gültigen Gleichungen für die im Kondensator gespeicherte Energie:

$$W_C = 1/2 \cdot C \cdot u_C^2 \tag{1}$$

und die in der Induktivität gespeicherte Energie:

$$W_L = 1/2 \cdot L \cdot i_L^2 \tag{2}$$

läßt sich die Differenzenergie $W_\Delta$ wie folgt formulieren:

$$W_\Delta = 1/2 \cdot [C \cdot (\mathbf{u}_{C0} - \mathbf{u}_{CS})^2 + L \cdot (\mathbf{i}_{L0} - \mathbf{i}_{LS})^2] \to \text{Min.} \tag{3}$$

Um den Schaltzeitpunkt $t_S$ mit Hilfe dieser Gleichung bestimmen zu können, sind zunächst die unbekannten Zustandsgrößen $\mathbf{u}_{CS}$ und $\mathbf{i}_{LS}$ zum Zeitpunkt $t_S$ durch bekannte Werte zu substituieren. Dazu ist es erforderlich, den zeitlichen Verlauf der Zustandsgrößen $\mathbf{u}_C$ und $\mathbf{i}_L$ im Zeitraum $t_A \leq t \leq t_S$ zu beschreiben:

$$\mathbf{u}_{CS} = \mathbf{u}_{CA} + 1/C \cdot \int_{t=t_A}^{t=t_S} (\mathbf{i}_L - \mathbf{i}_P)\,dt \tag{4}$$

$$\mathbf{i}_{LS} = \mathbf{i}_{LA} + 1/L \cdot \int_{t=t_A}^{t=t_S} (\mathbf{u}_{Netz} - R \cdot \mathbf{i}_L - \mathbf{u}_C)\,dt \tag{5}$$

Der Zeitpunkt $t_A$ bezeichnet dabei den Abtastzeitpunkt der Zustandsgrößen-Istwerte $\mathbf{u}_{CA}$ und $\mathbf{i}_{LA}$.

Ohne Beweis sei hier festgestellt, daß nur bei Annahme eines linearen Zeitverlaufes für die Zustandsgrößen $\mathbf{u}_C$ und $\mathbf{i}_L$ ein eindeutiger Wert für den Schaltzeitpunkt $t_S$ berechenbar ist; es existiert dann nur eine reelle Lösung.

Die Gleichungen (4) und (5) müssen daher in einfache Differentialgleichungen mit konstanten Gradienten

überführt werden:

$$\mathbf{u}_{CS} = \mathbf{u}_{CA} + \Delta t \cdot \dot{\mathbf{u}}_{C} \qquad (6)$$

$$\mathbf{i}_{LS} = \mathbf{i}_{LA} + \Delta t \cdot \dot{\mathbf{i}}_{L} \qquad (7)$$

wobei $\Delta t$ den verbleibenden Zeitraum vom Abtastzeitpunkt $t_A$ der Zustandsgrößen-Istwerte $\mathbf{u}_{CA}$ und $\mathbf{i}_{LA}$ bis zum Umschaltzeitpunkt $t_S$ angibt und somit die letztendlich gesuchte Größe darstellt:

$$\Delta t = t_{S} - t_{A} \qquad (8)$$

Um im betrachteten Zeitintervall $\Delta t$ mit konstanten Gradienten rechnen zu können, sind folgende weitergehende Annahmen erforderlich:
mit

$$u_{Netz}, u_{C}, i_{L}, i_{P} \approx konst. \qquad (9)$$

und

$$u_{Netz} = u_{NetzA} \qquad (10)$$

$$u_{C} = u_{CA} \qquad (11)$$

$$i_{L} = i_{LA} \qquad (12)$$

$$i_{P} = i_{PA} \qquad (13)$$

gilt:

$$\dot{\mathbf{u}}_{C} = 1 / C \cdot (\mathbf{i}_{LA} - \mathbf{i}_{PA}) \qquad (14)$$

$$\dot{\mathbf{i}}_{L} = 1 / L \cdot (\mathbf{u}_{NetzA} - \mathbf{i}_{LA} \cdot R_{ges} - \mathbf{u}_{CA}) \qquad (15)$$

Die linearen Differentialgleichungen zur Bestimmung der Zustandsgrößen $\mathbf{u}_{CS}$ und $\mathbf{i}_{LS}$ lauten somit:

$$\mathbf{u}_{CS} = \mathbf{u}_{CA} + \Delta t \cdot \dot{\mathbf{u}}_{C} = \mathbf{u}_{CA} + \Delta t \cdot 1 / C \cdot (\mathbf{i}_{LA} - \mathbf{i}_{PA}) \qquad (16)$$

$$i_{LS} = i_{LA} + \Delta t \cdot \dot{i}_L = i_{LA} + \Delta t \cdot 1 / L \cdot (u_{NetzA} - i_{LA} \cdot R_{ges} - u_{CA})$$

$$(17)$$

Durch Einsetzen der Gleichungen (16) und (17) in Gleichung (3) erhält man schließlich durch Bilden der ersten Ableitung d/d$\Delta$t und anschließendem Nullsetzen von Gleichung (3) die gesuchte Berechnungsgleichung für $\Delta$t.

Bei Schreibweise in $\alpha$-$\beta$-Koordinaten lautet sie:

$$\Delta t = t_S - t_A = \frac{C \cdot (\Delta u_{C\alpha} \cdot \dot{u}_{C\alpha} + \Delta u_{C\beta} \cdot \dot{u}_{C\beta}) + L \cdot (\Delta i_{L\alpha} \cdot \dot{i}_{L\alpha} + \Delta i_{L\beta} \cdot \dot{i}_{L\beta})}{C \cdot (\dot{u}_{C\alpha}{}^2 + \dot{u}_{C\beta}{}^2) + L \cdot (\dot{i}_{L\alpha}{}^2 + \dot{i}_{L\beta}{}^2)}$$

$$(18)$$

mit:

$$\Delta u_{C\alpha,\beta} = u_{C0\alpha,\beta} - u_{CA\alpha,\beta} \qquad (19)$$

$$\Delta i_{L\alpha,\beta} = i_{L0\alpha,\beta} - i_{LA\alpha,\beta} \qquad (20)$$

Gleichung (18) ist praktisch immer lösbar und stellt einen einfach handhabbaren Ausdruck für die on-line Berechnung des nächsten Schaltzeitpunktes dar. Zur Beurteilung, inwieweit die mit dieser Gleichung berechneten Ergebnisse richtig bzw. plausibel sind, ist eine Plausibilitätsüberprüfung erforderlich.

Die Berechnung des zu realisierenden Schaltzeitpunktes $t_S$ erfolgt dabei ausgehend von Gleichung (3) mit Werten, die eigentlich zu unterschiedlichen Zeitpunkten gültig sind:

Sollwerte: $u_{C0}$, $i_{L0}$ zu den Zeitpunkten $t_0$, die durch das jeweils gewählte optimierte Pulsmuster vorgegeben sind

Istwerte: $u_{CS}$, $i_{LS}$ zu den tatsächlichen Schaltzeitpunkten $t_S$, die erst durch die Regelung entstehen.

Der Schaltzeitpunkt, der sich durch Auswertung der Gleichung (3) berechnen läßt, ist somit im mathematischen Sinn nicht vollständig exakt (Suboptimum).

Die Verwendung unterschiedlicher Bezugs zeitpunkte erweist sich aber aus praktischen Überlegungen heraus als notwendig, da somit

- die on-line Berechnung des Schaltzeitpunktes erheblich vereinfacht wird (Rechnung ist nur für diskrete Zeitpunkte erforderlich und daher mit den heute verfügbaren Mikroprozessoren on-line durchführbar; eine sonst u.U. erforderliche iterative Berechnung der Schaltzeitpunkte wird vermieden) und
- die Schaltfrequenz eindeutig begrenzt bleibt (sonst könnte Zweipunktverhalten mit einer unzulässig hohen Schaltfrequenz auftreten).

Die Genauigkeit, mit der der neue (on-line) bestimmte Schaltzeitpunkt berechnet werden kann, hängt davon ab, in welchem zeitlichen Abstand sich der Abtastzeitpunkt $t_A$ der Zustandsgrößen-Istwerte zum berechneten Schaltzeitpunkt $t_S$ befindet. Dabei gilt, daß die Genauigkeit der Berechnung zunimmt, je kleiner der zeitliche Abstand beider Zeitpunkte wird. Ursache ist die Annahme konstanter Gradienten der Zustandsgrößen $u_C$ und $i_L$ für den Zeitbereich von $t_A$ bis $t_S$. Das bestmögliche Regelergebnis wird dann erreicht, wenn die Abtastung der Istwerte und die Berechnung des Schaltzeitpunktes unmittelbar vor der Ausführung der Schalthandlung erfolgt. Bei der zu empfehlenden Verwendung einer konstanten Rechen- und Abtastperiodendauer heißt das, daß Rechen- und Abtastperiodendauer so klein wie möglich zu wählen sind. Die zur Durchführung der Berechnungen zur Verfügung stehende Zeit kann anhand der Mindestschaltzeiten der Ventile abgeschätzt werden können, da grundsätzlich jede Schalthandlung neu berechnet werden muß, wenn die Dynamik des Verfahrens erhalten bleiben soll.

Die Berechnung des zu realisierenden Schaltzeitpunktes erfolgt nicht in der Form eines absoluten Zeitpunktes, sondern mit Bezug auf den im Rechenintervall gültigen Abtastzeitpunkt. Es wird somit die verbleibende Zeit $\Delta t = t_S - t_A$ bis zur nächsten Schalthandlung berechnet. Das entsprechende Ergebnis ist somit zunächst rein mathematischer Natur, wobei die Lösungsmenge den gesamten Wertebereich von $-\infty < \Delta t < +\infty$ umfaßt. Das mathematische Rechenergebnis ist daher interpretationsbedürftig und muß außerdem in seiner Gültigkeit eingeschränkt werden, um einen Bezug zur (physikalischen) Realität zu erhalten.

Entstehen bei der Berechnung von $\Delta t$ Ergebnisse, die in der gleichen Größenordnung liegen wie die Schaltzeiten der optimierten Pulsmuster, so kann davon ausgegangen werden, daß die berechneten Werte richtig sind. Die Schalthandlung erfolgt dann zum berechneten Zeitpunkt. Wird ein betragsmäßig "kleiner" negativer Ausdruck für $\Delta t$ berechnet, so lag der optimale Schaltzeitpunkt bereits vor dem Abtastzeitpunkt $t_A$. Eine sofortige Umschaltung ist dann - unter Beachtung von Mindestschaltzeiten - die beste Lösung. Betragsmäßig "kleine" Werte von $\Delta t$ lassen sich somit eindeutig interpretieren und in Schalthandlungen umsetzen.

Es stellt sich nun die Frage, wie mit betragsmäßig "großen" Werten für $\Delta t$ umzugehen ist, da Schaltzeiten mit $\Delta t \rightarrow +\infty$ offensichtlich unsinnig sind und wo die Grenzen zwischen "klein" (d.h. richtig) und "groß" (d.h. falsch) liegen.

Betragsmäßig "große" Rechenwerte für $\Delta t$ stellen sich offenbar dann ein, wenn der derzeitige Schaltzustand des Stromrichters nicht der am besten geeignete ist, um den gewünschten Energiezustand der Filter-Zustandsgrößen in kurzer Zeit zu erreichen. Das kann z.B. (unerwünschterweise) bei sprungförmigen Störgrößenänderungen eintreten, für schnelle Pulsmusterwechsel betriebsmäßig erforderlich sein oder auch im Zusammenhang mit (gewünschten) Pulsmusterumschaltungen auftreten.

Bei derartigen Betriebszuständen, die unter Umständen auch Winkelsprünge des Umrichter-Stellgrößenvektors erforderlich machen, ist die zustandsorientierte Regelung allein überfordert, so daß Gültigkeitsgrenzen für die Schaltzeitpunkte $t_S$ (bzw. für $\Delta t$) definiert werden müssen.

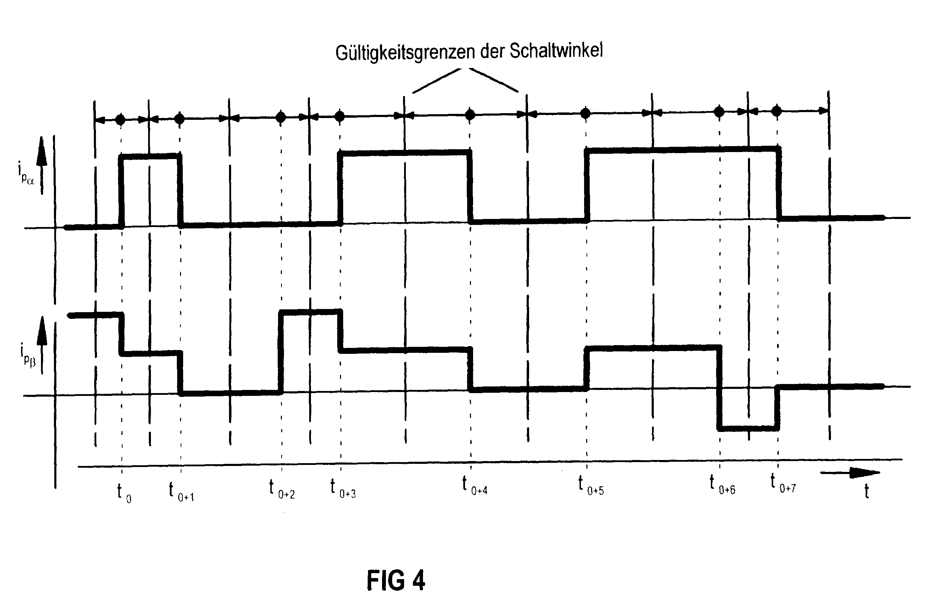

Das geschieht in der Weise, daß für die Zeitdifferenz $|t_S - t_0|$ ein Toleranzbereich vorgegeben wird, bei dessen Überschreitung eine zwangsweise gesteuerte Umschaltung auf den nächsten Schaltzustand des optimierten Pulsmusters erfolgt. Bei den dazu durchgeführten Simulationsuntersuchungen wurde festgestellt, daß die größtmögliche Dynamik dann erreicht wird, wenn sich der Toleranzbereich am Zeitverlauf des jeweilig gültigen optimierten Pulsmuster orientiert. Die Gültigkeitsgrenzen für die berechneten Schaltzeitpunkte werden dabei so festgelegt, daß sie jeweils den Mittelwert zweier aufeinanderfolgender Schaltwinkel des optimierten Pulsmusters entsprechen. Die Figur 4 verdeutlicht diese Aussagen.

Von besonderer Bedeutung ist dabei, daß durch die Zwangssynchronisation der zustandsorientierten Regelung die Schaltfrequenz des Stromrichters immer unter Kontrolle bleibt, da es keine unsinnigen Schaltzeitpunkte mehr gibt.

Daß die erste Schalthandlung nach sprungförmigen Signaländerungen gesteuert erfolgt, ist nur von geringer Bedeutung. Eine eventuelle Anregung des Filterschwingkreises durch den nicht optimalen Schaltzeitpunkt wird durch die spätestens im nächsten Abtastintervall eingreifende zustandsorientierte Regelung wirkungsvoll bedämpft. Diese Vorgehensweise gestattet zwar nur eine suboptimale Benutzung der (theoretisch) erreichbaren Dynamik, ermöglicht aber die einheitliche Behandlung aller sprungförmigen Führungs- und Störgrößenänderungen.

Damit der Mittelwert zweier aufeinanderfolgender Schaltwinkel des optimierten Pulsmusters ermittelt werden kann, werden der Einrichtung 34 zur Plausibilitätsprüfung zwei aufeinanderfolgende Schaltzeitpunkte $t_0$ und $t_{0+1}$ aus dem Pulsmusterspeicher 26 zugeführt. Damit sich der Toleranzbereich am Zeitverlauf des jeweils gültigen optimierten Pulsmuster orientieren kann, wird vom Pulsmusterspeicher 26 der Einrichtung 34 außerdem der Soll-Schaltzustand $S_0$ zugeführt. In der Einrichtung 34 erfolgt zusätzlich noch eine Überwachung auf Einhaltung der Mindestein- und -ausschaltzeiten.

Ferner wird in einem weiteren Schritt geprüft, ob sich der vom optimierten Pulsmuster übernommene nächste Schaltzustand $S_0$ von dem im Abtastintervall bereits vorliegenden Schaltzustand $S_A$ unterscheidet. Ist dies der Fall, so wird der Schaltzustand $S_0$ zum Zeitpunkt $t_S$ als auszuführender Schaltzustandsvektor $S_S$ an den Steuersatz 28 übergeben. Damit diese Überprüfung stattfinden kann, wird der im Abtastintervall bereits vorliegende Schaltzustand $S_A$ vom Steuersatz 28 an die Einrichtung 34 übergeben.

Der Steuersatz 28, auch als Ansteuerelektronik bezeichnet, generiert aus dem Schaltzustandsvektor $S_S$ die Ansteuersignale $S_v$ für die Leistungshalbleiter des Stellgliedes 2. Dabei werden unter anderem (vorzugsweise hardwaremäßig) die Verriegelungsbedingungen der Ventile realisiert.

Um die Anzahl der erforderlichen Meßglieder einzuschränken, erfolgt die Bestimmung des für den Zustandsregler 32 eigentlich benötigten Istwertes der Zustandsgröße $i_p$ durch Messung des Zwischenkreisstromes $i_{ZW}$, wobei der im Abtastintervall vorliegende, bekannte Ventilschaltzustand $S_A$ eine Abbildung des Zwischenkreisstromes auf die drei Stränge der Netzseite des Stellgliedes 2 gestattet. Die Zustandsregelung arbeitet dann mit dem auf diese Weise gewonnenen Modellsignal $i_{PM}$. Diese Generierung des Modellsignals $i_{PM}$ wird mittels eines vereinfachten Stellgliedmodells 36 in Abhängigkeit eines vorliegenden Schaltzustands $S_A$ und des gemessenen Zwischenkreisstromes $i_{ZW}$ durchgeführt.

Für die Bildung der Netz-Grundschwingungsspannung $u_{Netz(1)}$, die der Einrichtung 30 zur Berechnung eines Sollwertes $u_{C0}$ und $i_{L0}$ des vierdimensionalen Vektors und dem Grundschwingungs-Sollwertrechner 24 zugeführt wird, ist eine Einrichtung 38 vorgesehen, die eingangsseitig mit dem Netz 6 verbunden ist. Da die Auswahl eines für den (quasi-)stationären Arbeitspunkt geeigneten Pulsmusters auf der ausschließlichen Verwendung einer Grundschwingungsbetrachtung des Systems beruht, muß deshalb in geeigneter Weise die zu den Abtastzeitpunkten $t_A$ gemessene Netzspannung beispielsweise durch ein Bandpaßfilter geglättet werden.

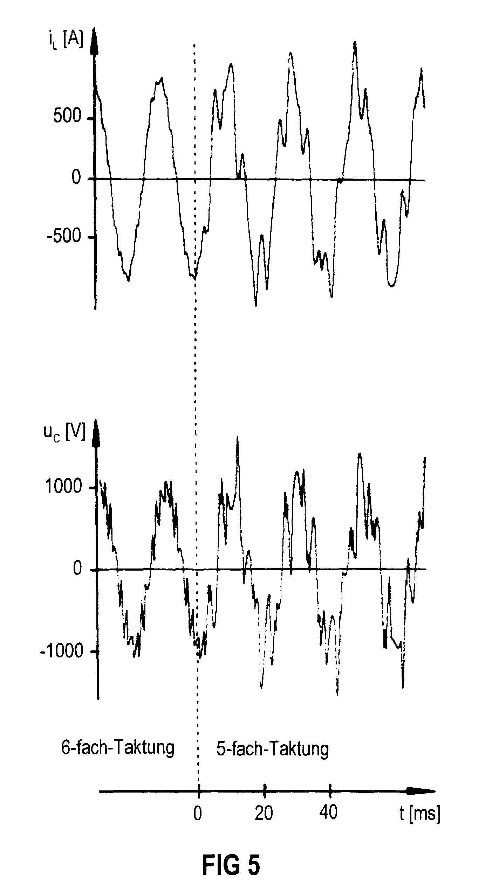

Die hier dargestellten Simulationsergebnisse (Figur 5 bis Figur 10) zeigen das Stellgliedverhalten bei Anwendung des neuen Modulations- und Regelverfahrens im Vergleich zu einer konventionellen Steuerung mit optimierten Pulsmustern.

Die Untersuchungen erfolgten dabei vor allem für solche Betriebsfälle, die typischen Anforderungen für einen praktischen Einsatz entsprechen und dabei besonders deutliche Anregungen des Filterschwingkreises erwarten lassen.

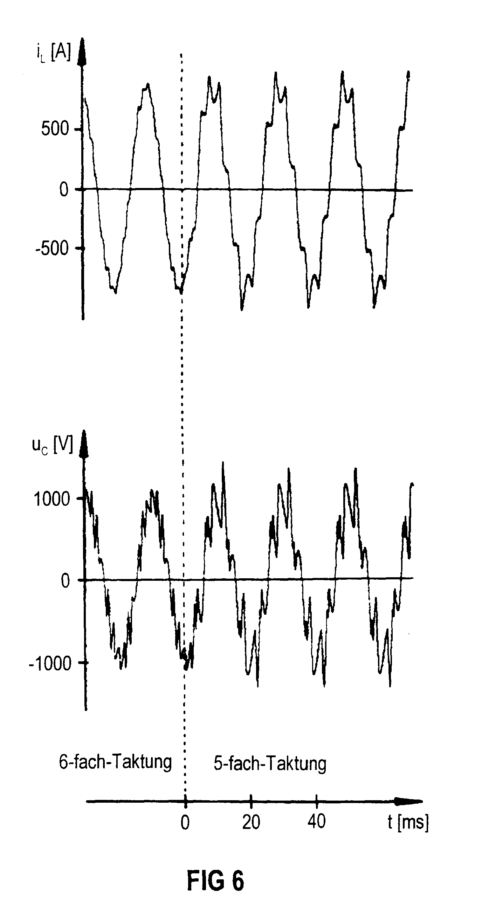

Die Figuren 5 und 6 zeigen das dynamische Führungsgrößen-Verhalten bei Pulsmusterwechsel. Mit Hilfe der zustandsorientierten Regelung ist es möglich, Pulsmusterwechsel zu jedem gewünschten Zeitpunkt durchzuführen. Damit ist eine wesentlich höhere Dynamik bei Führungsgrößenänderungen erreichbar als bei alleiniger Verwendung einer Steuerung mit optimierten Pulsmustern. Als charakteristisches Beispiel ist in den Figuren 5 und 6 der Übergang von einer 6-fach- auf eine 5-fach-Taktung dargestellt. Der neue stationäre Betriebspunkt wird bereits nach ca. einer halben Netzperiode ohne nennenswerte Überschwinger erreicht (Figur 6). Der transiente Vorgang bei Verwendung von optimierten Pulsmustern (Figur 5) ist dagegen nur sehr schwach gedämpft und mit deutlichem Überschwingen von Strom und Spannung verbunden.

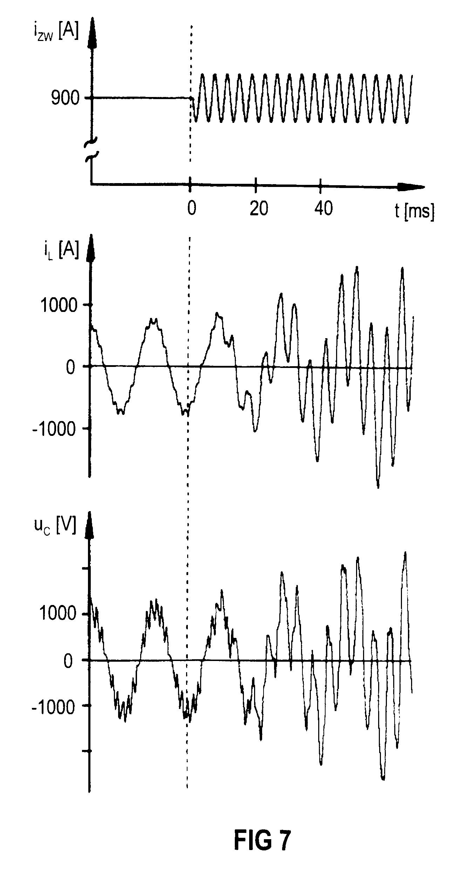

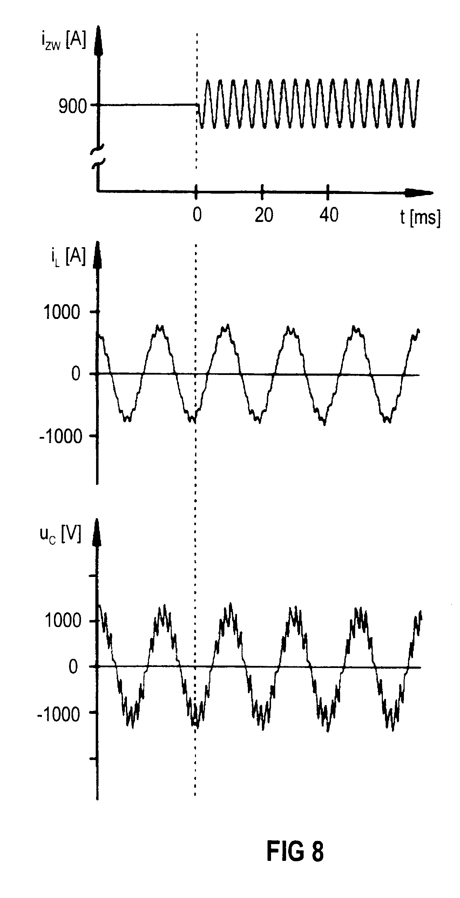

Die Figuren 7 und 8 zeigen eine aktive Dämpfung des Filterkreises bei Anregung durch interharmonische Schwingungen. Bei endlich großer Zwischenkreisdrossel 16 gilt die Annahme $I_{ZW}$=konst. nicht mehr. So entsteht z.B. durch Rückwirkungen des maschinenseitigen Wechselrichters 4 eine Stromwelligkeit, deren Frequenz (bei 6-pulsigen Wechselrichtern) das 6-fache der maschinenseitigen Grundschwingungsfrequenz beträgt: $f_{ZW}=6 \cdot f_{masch}$. Durch Überlagerung des welligen Zwischenkreisstromes mit der Netzfrequenz entstehen auf der Netzseite des Umrichtersystems Mischfrequenzen, die im allgemeinen kein ganzzahliges Vielfaches der Netzfrequenz sind (Interharmonische).

Die Figuren 7 und 8 zeigen die Simulationsergebnisse für einen solchen Fall. Es werden jeweils Netzstrom $i_L$ und Kondensatorspannung $u_C$ bei Modulation des Stellgliedes 2 mit optimierten Pulsmustern (Figur 7) und bei Modulation mit überlagerter zustandsorientierter Regelung (Figur 8) gegenübergestellt.

Die vom motorseitigen Wechselrichter herrührende Welligkeit des Zwischenkreisstromes, wird durch eine sinusförmige Störgröße mit der Frequenz $f_{ZW}$ nachgebildet. Die Frequenz $f_{ZW}$ wird dabei so gewählt, daß mit $f_{ZW}=f_{Res}+f_L$ der netzseitige Filterschwingkreis maximal angeregt wird. Die Pulsung des Netzstromrichters erfolgt mit 6-fach-Taktung bei einem Aussteuerungsgrad von $A \approx 0{,}72$. Durch die zustandsorientierte Regelung (Figur 8) gelingt es, den Filterschwingkreis wirksam zu bedämpfen, wenngleich für ein vollständiges Ausregeln von Störgrößen ein Ausweichen der Regelreserve erforderlich ist. Ursache für eine unvollständige Ausregelung von Storgrößen können z.B. Mindestzeitprobleme an der Aussteuergrenze des jeweiligen Pulsmusters sein. Eine wirksame aktive Bedampfung des Filterschwingkreises wird aber in jedem Fall erreicht.

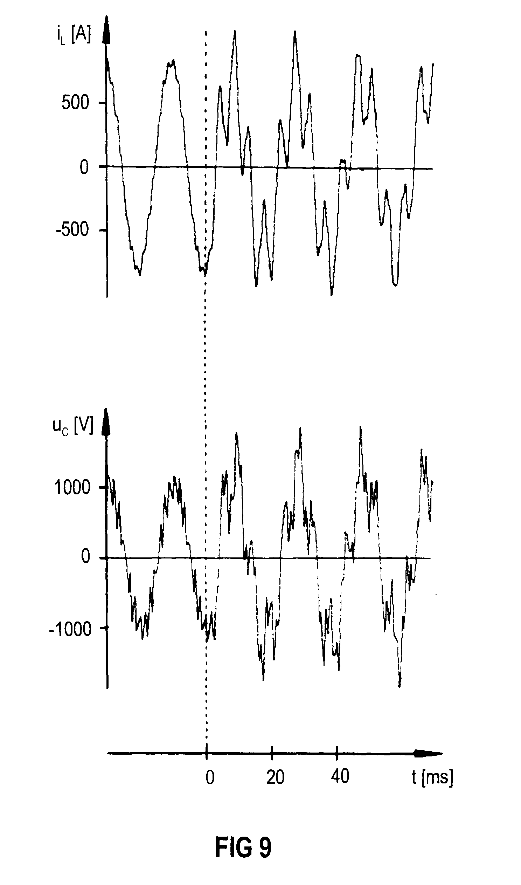

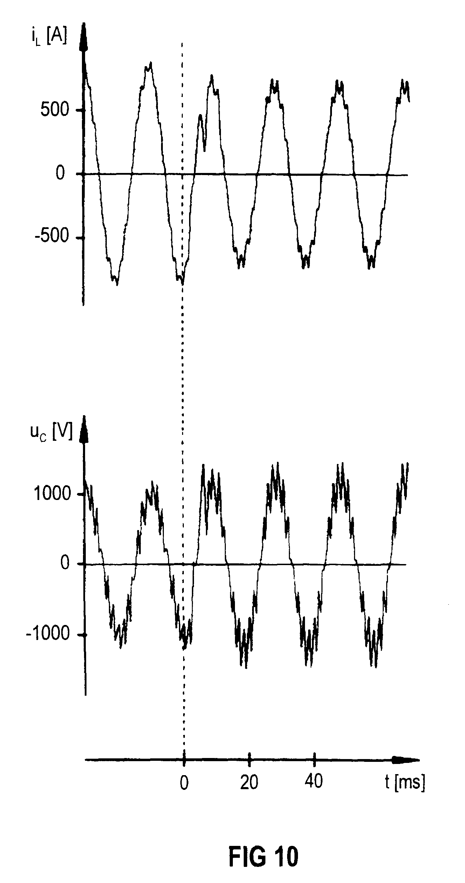

Die Figuren 9 und 10 zeigen das transiente Verhalten bei Netzstörungen. Beeinflussungen des Stellgliedes 2 durch Störungen im Speisenetz können in der Praxis in vielfältiger Form auftreten. Neben - praktisch immer vorhandenen - Oberschwingungen in der Netzspannung $u_{Netz}$ sind diese z.B. Kurzunterbrechungen, ein- oder mehrphasige Kurzschlüsse und Netzumschaltungen.

Für die Simulationsuntersuchung war von besonderem Interesse, inwieweit sprungförmige Änderungen des Netzzustandes mit der neuen Regelung beherrscht werden, ohne daß Notabschaltungen erforderlich sind. Als Beispiel soll die sprungförmige Änderung der Netzspannung $u_{Netz}$ betrachtet werden, wie sie z.B. beim Umschalten in Kraftwerks(eigenbedarfs-)netzen auftreten kann.

Die Figuren 9 und 10 zeigen einen solchen simulierten Betriebsfall, wobei eine Netzspannungsänderung um +20 % und ein Sprung im Netzwinkel um +28° el. angenommen wurde. Rein gesteuert durch optimierte Pulsmuster (Figur 9) ist nach einer derartigen Störung kein vernünftiger Betrieb des Stellgliedes 2 mehr gewährleistet. Um Schutzabschaltungen zu vermeiden, müßte der Umrichter zudem deutlich überdimensioniert werden. Mit einem zustandsorientierten Regelverfahren (Figur 10) sind dagegen solche - und andere - Netzstörungen beherrschbar. Die Ausregelung derartiger Großsignal-Störungen erfolgt dabei in zwei Schritten. Im ersten Schritt wird der neue Schaltzustand gesteuert vorgegeben, wobei die Schaltzustandsänderung - unter Betrachtung der Mindestschaltzeit - so schnell wie möglich erfolgt. Erst im zweiten Schritt greift die eigentliche zustandsorientierte Regelung ein, wobei durch die on-line Berechnung der Schaltzeiten die bestmögliche aktive Bedampfung des Schwingkreises erfolgt.

Oberschwingungen in der Netzspannung $\mathbf{u}_{Netz}$ entsprechen demgegenüber Kleinsignal-Störungen und sind mit der zustandsorientierten Regelung ebenfalls problemlos beherrschbar. Das Regelverhalten ist prinzipiell das gleiche wie bei der Unterdrückung von interharmonischen Anregungen des Filterschwingkreises.

Das vorgestellte erfindungsgemäße Modulations- und Regelverfahren verbindet die Vorteile off-line optimierter Pulsmuster (hohe stationäre Güte) mit der hohen Dynamik einer zustandsorientierten Regelung. Die Simulationsergebnisse belegen die vorzuge des neuen Modulations- und Regelverfahrens gegenuber der einfachen Steuerung mit optimierten Pulsmustern. Durch die zustandsorientierte Regelung wird eine wirksame Bedampfung des Filterschwingkreises erreicht, wenngleich zur vollständigen Auslegung von Störgrößen eine ausreichende Regelreserve erforderlich ist. Dieses erfindungsgemäße Verfahren ist nicht nur speziell für den Einsatz bei einem gepulsten Netzstromrichter bei Hochleistungs-Umrichterantrieben mit Strom-Zwischenkreis zu benutzen, es empfiehlt sich auch für den maschinenseitigen Wechselrichter. Die Grundgedanken des vorgestellten Regelverfahrens lassen sich auch auf Pulswechselrichter mit Spannungszwischenkreis und netz- bzw. maschinenseitigen Filter übertragen. Bei der on-line Berechnung der Energiesollwerte ist dann von einer konstanten Zwischenkreisspannung auszugehen.

**Patentansprüche**

1. Verfahren zur Regelung eines vierdimensionalen Vektors ($\mathbf{u}_C,\mathbf{i}_L$) einer Strecke (6,8,10) mittels eines wertediskreten Stellgliedes (2) mit begrenzter Schaltfrequenz ($f_p$), wobei in Abhängigkeit eines Aussteuerungsgrades (A) und eines Grundschwingungsphasenwinkels ($\alpha$) ein Soll-Schaltzustand ($\boldsymbol{S}_0$) mit zugehörigem Schaltzeitpunkt ($t_0$) aus einer Pulsmustertabelle ausgelesen wird, wobei in Abhängigkeit des ausgewählten Pulsmusters, des Soll-Schaltzustandes ($\boldsymbol{S}_0$), eines Stellglied-Ausgangssollwertes ($\overset{*}{i}_{ZW}$) und einer ermittelten Grundschwingungsspannung ($\mathbf{u}_{Netz(1)}$) der Strecke (6,8,10) unter Verwendung von Streckenparametern ($R_{ges},L_{ges},C$) ein Sollwert ($\mathbf{u}_{C0}$, $\mathbf{i}_{L0}$) des vierdimensionalen Vektors ($\mathbf{u}_C,\mathbf{i}_L$) zum ausgelesenen Schaltzeitpunkt ($t_0$) berechnet wird, wobei eine verbleibende Zeit ($\Delta t$) bis zur nächsten Schalthandlung derart berechnet wird, daß eine Differenz zwischen dem berechneten Sollwert ($\mathbf{u}_{C0}$, $\mathbf{i}_{L0}$) und einem Istwert ($\mathbf{u}_{CS},\mathbf{i}_{LS}$) des vierdimensionalen Vektors ($\mathbf{u}_C,\mathbf{i}_L$) zu einem tatsächlichen Schaltzeitpunkt ($t_S$) minimal wird, wobei in Abhängigkeit von bestimmten Schaltzustandspunkt-Grenzwerten die berechnete verbleibende Zeit ($\Delta t$) auf Plausibilität überprüft wird und wobei in Abhängigkeit dieser Plausiblitätsprüfung der ausgelesene Soll-Schaltzustand ($\boldsymbol{S}_0$) zum tatsächlichen Schaltzeitpunkt ($t_S$) als auszuführender Schaltzustand ($\boldsymbol{S}_S$) bereitgestellt wird, aus dem dann Ansteuersignale ($\boldsymbol{S}_v$) für das wertediskrete Stellglied (2) generiert werden.

2. Verfahren nach Anspruch 1, wobei bei der Plausibilitätsprüfung festgestellt wird, ob der ausgelesene Soll-Schaltzustand ($\boldsymbol{S}_0$) sich von einem bereits vorliegenden Schaltzustand ($\boldsymbol{S}_A$) unterscheidet, so daß entweder der Soll-Schaltzustand ($\boldsymbol{S}_0$) oder der bereits vorliegende Schaltzustand ($\boldsymbol{S}_A$) als auszuführender Schaltzustand ($\boldsymbol{S}_S$) bereitgestellt wird.

3. Verfahren nach Anspruch 1, wobei ein Grenzwert für den Zeitpunkt für eine auszuführende Schalthandlung aus den Werten zweier aufeinanderfolgender ausgelesener Schaltzeitpunkte ($t_0,t_{0+1}$) berechnet wird.

4. Vorrichtung zur Durchführung des Verfahrens nach Anspruch 1 mit einem Grundschwingungs-Sollwertrechner (24), einem Pulsmusterspeicher (26) und einem Steuersatz (28), dessen Ausgänge mit Steuereingängen eines wertediskreten Stellgliedes (2) mit begrenzter Schaltfrequenz (fp) verknüpft sind, wobei der dem Grundschwingungs-Sollwertrechner (24) nachgeschaltete Pulsmusterspeicher (26) einerseits mit einer Einrichtung (30) zur Berechnung eines Sollwertes ($\mathbf{u}_{C0},\mathbf{i}_{L0}$) des vierdimensionalen Vektors ($\mathbf{u}_C,\mathbf{i}_L$) und andererseits mit einer Einrichtung (34) zur Plausibilitätsprüfung verbunden ist, wobei die Einrichtung (30) zur Berechnung des Sollwertes ($\mathbf{u}_{C0}$, $\mathbf{i}_{L0}$) des vierdimensionalen Vektors ($\mathbf{u}_C,\mathbf{i}_L$) ausgangsseitig mit einer Einrichtung (32) zur Berechnung eines tatsächlichen Schaltzeitpunktes ($\overset{*}{t}_S$) verbunden ist, die ausgangsseitig mit einem Eingang der Einrichtung (34) zur Plausibilitätsprüfung verbunden ist, wobei diese Einrichtung (34) ausgangsseitig mit Eingängen des Steuersatzes (28) verknüpft ist, wobei an den Einrichtungen (30,32) Streckenparameter ($R_{ges},L_{ges},C$) und an der Einrichtung (32) Istwerte ($\mathbf{u}_C,\mathbf{i}_L$, $\mathbf{u}_{Netz},\mathbf{i}_{PM}$) der Strecke (6,8,10) anstehen und wobei eine Einrichtung (38) zur Grundschwingungsbildung einer Streckengröße ($\mathbf{u}_{Netz(1)}$) vorgesehen ist, die eingangsseitig mit der Strecke (6,8,10) und ausgangsseitig einerseits mit der Einrichtung (30) zur Berechnung des Sollwertes ($\mathbf{u}_{C0}$, $\mathbf{i}_{L0}$) des vierdimensionalen Vektors ($\mathbf{u}_C,\mathbf{i}_L$) und andererseits mit dem Grundschwingungs-Sollwertrechner (24) verbunden ist.

5. Vorrichtung nach Anspruch 4, wobei zur Ermittlung des Stellglied-Eingangsistwertes ($i_{PM}$) ein vereinfachtes Stellgliedmodell (36) vorgesehen ist, das eingangsseitig einerseits mit einem Ausgang des Stellgliedes (2) und andererseits mit einem Ausgang des Steuersatzes (28), an dem ein Schaltzustand ($\boldsymbol{S}_A$) ansteht, verbunden ist.

6. Vorrichtung nach Anspruch 4, wobei als Einrichtung (30) zur Berechnung der Sollwerte ($u_{C0}$,$i_{L0}$) des vierdimensionalen Vektors ($u_C$,$i_L$) und als Einrichtung (32) zur Berechnung eines tatsächlichen Schaltzeitpunktes ($t_S$) ein schneller Rechner vorgesehen ist.

7. Vorrichtung nach Anspruch 6, wobei als schneller Rechner ein Signalprozessor vorgesehen ist.

**Claims**

1. A method of controlling a four-dimensional vector ($u_C$,$i_L$) of a controlled system (6, 8, 10) by means of a discrete-value control element (2) with a limited switching frequency ($f_p$), wherein as a function of a modulation factor (A) and a fundamental frequency phase angle ($\alpha$), a setpoint switching status ($S_0$) with associated switching time ($t_0$) is selected from a pulse pattern table, wherein as a function of the selected pulse pattern, of the setpoint switching status ($S_0$), of a control element starting setpoint value ($i^*_{ZW}$) and of a determined fundamental frequency voltage ($u_{Netz(1)}$) of the controlled system (6, 8, 10), using controlled system parameters ($R_{ges}$,$L_{ges}$,C) a setpoint value ($u_{C0}$,$i_{L0}$) of the four-dimensional vector ($u_C$,$i_L$) is calculated at the selected switching time ($t_0$), wherein a remaining time ($\Delta t$) up until the next switching operation is calculated such that a difference between the calculated setpoint value ($u_{C0}$,$i_{L0}$) and an actual value ($u_{CS}$,$i_{LS}$) of the four-dimensional vector ($u_C$,$i_L$) at an actual switching time ($t_S$) is minimised, wherein as a function of specified switching time limit values the calculated remaining time ($\Delta t$) is checked for plausibility, and wherein as a function of this plausibility check the selected setpoint switching status ($S_0$) is made available at the actual switching time ($t_S$) as switching status ($S_S$) to be implemented, from which control signals ($S_v$) for the discrete-value control element (2) are then generated.

2. A method according to Claim 1, wherein in a plausibility check it is established whether the selected setpoint switching status ($S_0$) differs from an already existing switching status ($S_A$) so that either the setpoint switching status ($S_0$) or the already existing switching status ($S_A$) is made available as switching status ($S_S$) to be implemented.

3. A method according to Claim 1, wherein a limit value for the time for a switching operation to be implemented is calculated from the values of two consecutive, selected switching times ($t_0$, $t_{0+1}$).

4. A device for the implementation of the method according to Claim 1, comprising a fundamental frequency setpoint value calculator (24), a pulse pattern store (26) and trigger equipment (28), the outputs of which are linked to control inputs of a discrete-value control element (2) with a limited switching frequency ($f_p$), wherein the pulse pattern store (26) arranged downstream of the fundamental frequency setpoint value calculator (24) is connected on the one hand to a device (30) for calculating the setpoint value ($u_{C0}$,$i_{L0}$) of the four-dimensional vector ($u_C$,$i_L$) and on the other hand to a device (34) for plausibility checking, wherein the device (30) for calculating the setpoint value ($u_{C0}$,$i_{L0}$) of the four-dimensional vector ($u_C$,$i_L$) is connected at its output to a device (32) for calculating an actual switching time ($t^*_s$) which at its output is connected to an input of the device (34) for plausibility checking, wherein said device (34) is connected at its output to inputs of the trigger equipment (28), wherein the devices (30, 32) are provided with controlled system parameters ($R_{ges}$,$L_{ges}$,C) and the device (32) is provided with actual values ($u_C$,$i_L$,$u_{Netz}$,$i_{PM}$) of the controlled system (6, 8, 10), and wherein a device (38) for forming the fundamental frequency of a controlled system variable ($u_{Netz(1)}$) is provided which at its input is connected to the controlled system (6, 8, 10) and at its output is connected on the one hand to the device (30) for calculating the setpoint value ($u_{C0}$,$i_{L0}$) of the four-dimensional vector ($u_C$,$i_L$) and on the other hand to the fundamental frequency setpoint value calculator (24).

5. A device according to Claim 4, wherein a simplified control element model (36) is provided for determining the control element input actual value ($i_{PM}$), which model (36) is connected at its input on the one hand to an output of the control element (2) and on the other hand to an output of the trigger equipment (28) which is supplied with a switching status ($S_A$).

6. A device according to Claim 4, wherein a high-speed calculator is provided as device (30) for calculating the setpoint values ($u_{C0}$,$i_{L0}$) of the four-dimensional vector ($u_C$,$i_L$) and as device (32) for calculating an actual switching time ($t_S$).

7. A device according to Claim 6, wherein a signal processor is provided as high-speed calculator.

**Revendications**

1. Procédé de règulation d'un vecteur quadridimensionnel ($\mathbf{u}_C$, $\mathbf{i}_L$) d'un système régulé (6, 8, 10) au moyen d'un élément de régulation (2) à valeurs discrètes et à fréquence de commutation ($f_p$) limitée, dans lequel on lit dans un tableau de modèles d'impulsions, en fonction d'un coefficient de régulation (A) et d'un angle de phase d'oscillation fondamentale ($\alpha$), un état de commutation de consigne ($\boldsymbol{S}_0$) avec un instant de commutation associé ($t_0$), on calcule, en fonction du modèle d'impulsion choisi, de l'état de commutation de consigne ($\boldsymbol{S}_0$), d'une valeur de consigne de sortie d'élément de régulation ($i_{ZW}^*$) et d'une tension d'oscillation fondamentale déterminée ($\mathbf{u}_{Netz(1)}$) du système régulé (6, 8, 10) et en utilisant des paramètres de système ($R_{ges}$, $L_{ges}$, C), une valeur de consigne ($\mathbf{u}_{C0}$, $\mathbf{i}_{L0}$) du vecteur quadridimensionnel ($\mathbf{u}_C$, $\mathbf{i}_L$) à l'instant de commutation lu ($t_0$), on calcule un temps restant ($\Delta t$) jusqu'à la prochaine manipulation de commutation de telle sorte qu'une différence entre la valeur de consigne calculée ($\mathbf{u}_{C0}$, $\mathbf{i}_{L0}$) et une valeur réelle ($\mathbf{u}_{CS}$ $\mathbf{i}_{LS}$) du vecteur quadridimensionnel ($\mathbf{u}_C$, $\mathbf{i}_L$) à un instant de commutation réel ($t_S$) soit minimale, on contrôle en fonction de certaines valeurs limites de point d'état de commutation la vraisemblance du temps restant calculé ($\Delta t$) et, on prépare en fonction de ce contrôle de vraisemblance l'état de commutation de consigne lu ($\boldsymbol{S}_0$) à l'instant de commutation réel ($t_S$) comme état de commutation à mettre en oeuvre ($\boldsymbol{S}_S$) à partir duquel on produit alors des signaux de commande ($S_v$) pour l'élément de régulation (2) à valeurs discrètes.

2. Procédé selon la revendicaticn 1, dans lequel, lors du contrôle de vraisemblance, on examine si l'état de commutation de consigne lu ($\boldsymbol{S}_0$) se distingue d'un état de commutation déjà présent ($\boldsymbol{S}_A$) de telle sorte que l'on prépare soit l'état de commutation de consigne ($\boldsymbol{S}_0$) sois l'état de commutation déjà présent ($\boldsymbol{S}_A$) comme élan de commutation ($\boldsymbol{S}_S$) à mettre en oeuvre.

3. Procédé selon la revendication 1, dans lequel on calcule à partir des valeurs de deux instants de commutation successifs lus ($t_0$, $t_{0+1}$) une valeur imite de l'instant d'une manipulation de commutation à mettre en oeuvre.

4. Dispositif pour la mise en oeuvre du procédé selon la revendication 1, qui comporte un calculateur de valeurs de consigne d'oscillation fondamentale (24), une mémoire de modèles d'impulsions (26) et une unité de commande (28) dont les sorties sont reliées à des entrées de commande d'un élément de régulation (2) à valeurs discrètes et à fréquence de commutation ($f_p$) limitée, et dans lequel la mémoire de modèles d'impulsions (26) branchée du côté aval du calculateur de valeurs ne consigne d'oscillation fondamentale (24) est reliée d'une part à un dispositif (30) destiné au calcul d'une valeur de consigne ($\mathbf{u}_{C0}$, $\mathbf{i}_{L0}$) du vecteur quadridimensionnel ($\mathbf{u}_C$, $\mathbf{i}_L$) et d'autre part à un dispositif (34) destiné au contrôle de vraisemblance, le dispositif (30) destiné au calcul de la valeur de consigne ($\mathbf{u}_{C0}$, $\mathbf{i}_{L0}$) du vecteur quadridimensionnel ($\mathbf{u}_C$, $\mathbf{i}_L$) est relié en sortie à un dispositif (32) qui est destiné au calcul d'un instant de commutation réel ($t_s^*$) et qui est relié en sortie à une entrée du dispositif (34) destiné au contrôle de vraisemblance, ce dispositif (34) est relié en sortie à des entrées de l'unité de commande (28), des paramètres de système ($R_{ges}$, $L_{ges}$, C) sont envoyés aux dispositifs (30, 32) et des valeurs réelles ($\mathbf{u}_C$, $\mathbf{i}_L$, $\mathbf{u}_{Netz}$, $\mathbf{i}_{PM}$) du système régulé (6, 8, 10) sont envoyées au dispositif (32) et, il est prévu un dispositif (38) qui est destiné à la formation d'oscillation fondamentale d'une grandeur de système ($\mathbf{u}_{Netz}(1)$) et qui est relié en entrée au système régulé (6, 8, 10) et en sortie d'une part au dispositif (30) destiné au calcul de la valeur de consigne ($\mathbf{u}_{C0}$, $\mathbf{i}_{L0}$) du vecteur quadrimensionnel ($\mathbf{u}_C$, $\mathbf{i}_L$) et d'autre part au calculateur de valeurs de consigne d'oscillation fondamentale (24).

5. Dispositif selon la revendication 4, dans lequel il est prévu pour déterminer la valeur réelle d'entrée d'élément de régulation ($\mathbf{i}_{PM}$) un modèle d'élément de régulation simplifié (36) qui est relié en entrée d'une part à une sortie de l'élément de régulation (2) et d'autre part à une sortie de l'unité de commande (28) qui fournit un état de commutation ($\boldsymbol{S}_A$).

6. Dispositif selon la revendication 4, dans lequel il est prévu comme dispositif (30) destiné au calcul de la valeur de consigne ($\mathbf{u}_{C0}$, $\mathbf{i}_{L0}$) du vecteur quadridimensionnel ($\mathbf{u}_C$, $\mathbf{i}_L$) et comme dispostif (32) destiné au calcul d'un instant de commutation réel ($t_S$) un calculateur rapide.

7. Dispositif selon la revendication 6, dans lequel il est prévu comme calculateur rapide un processeur de signaux.

**FIG 1**

FIG 2

**FIG 3**

FIG 4

FIG 5

6-fach-Taktung    5-fach-Taktung

FIG 6

**FIG 7**

FIG 8

**FIG 9**

**FIG 10**